Europäisches Patentamt

European Patent Office

Office européen des brevets

(19)

(11) Publication number: **0 263 821 B1**

# EUROPEAN PATENT SPECIFICATION

(12)

(45) Date of publication of patent specification: **30.10.91**  (51) Int. Cl.5: **B25J 11/00**, B05C 13/02

(21) Application number: **86903694.7**

(22) Date of filing: **09.06.86**

(86) International application number:
**PCT/SE86/00274**

(87) International publication number:
**WO 86/07298 (18.12.86 86/27)**

(54) **A DEVICE FOR CONTACT-FREE PIVOTING OF A STRUCTURE MEMBER.**

<table>
<tr><td>

(30) Priority: **12.06.85 SE 8502899**

(43) Date of publication of application:
**20.04.88 Bulletin 88/16**

(45) Publication of the grant of the patent:
**30.10.91 Bulletin 91/44**

(84) Designated Contracting States:
**DE FR IT**

(56) References cited:
**CH-B- 534 797**
**DE-A- 2 945 848**
**US-A- 4 342 536**
**US-A- 4 556 361**

**See also references of WO8607298**

</td><td>

(73) Proprietor: **GMFanuc Robotics Corporation
2000 South Adams Road
Auburn Hills, Michigan 48326-2800(US)**

(72) Inventor: **LARSSON, Ove
Fullriggareg. 10 B
S-421 74 Västra Frölunda(SE)**

(74) Representative: **Roth, Ernst Adolf Michael et al
GÖTEBORGS PATENTBYRA AB Box 5005
S-402 21 Göteborg(SE)**

</td></tr>
</table>

Rank Xerox (UK) Business Services

**Description**

The present invention refers to a method for contact-free pivoting of a magnetic metallic structural member, e.g. a door, a flap or the like, of and object, e.g. a car body about a hinge, fitted to the structural member and to the object so as to permit pivoting of said member along a path relative to the object, pivoting of said member about the hinge being effected by magnetically coupling said member with at least one magnet.

Background of the invention

At series production of passenger cars, and particularly at surface treatment by means of robots, it is a requirement to be able to paint the car body externally as well as internally without contaminating the fresh-painted surface. This means that it must be possible to automatically open and close the doors of the car body, without depositing any marks on the freshly painted doors. This problem has hitherto been solved by means of a robot, which e.g. is programmed to find a specific place on the door, e.g a bore, in which the lock components are intended to be affixed, and where the robot by means of a tool pulls the door towards itself and after terminated painting also closes the door. A prerequisite for this opening and closing operation is that the car body is positioned rather accurately relative to the robot, which in turn means that it has to be so complex as to be able to make the rather complicated motion pattern required for the opening and closing. Robots of this type are very expensive and they futhermore take up a great deal of space.

The same or similar problems will arise at other working moments in the car industry, e.g. at applying putty, at assembly, and of course in other industries.

It is earlier known (CH 534.797) to open a door of a building by means of electro magnets, which are recessed in a door leaf and the magnet poles of which are facing the floor, where they cooperate with ferromagnetic blocks recessed in the floor. By activating the magnets successively by means of a programming equipment a displacement is obtained between the blocks.

The purpose and most important features of the invention

The purpose of the present invention is to provide a method for contact-free opening and closing of a car door, a motor hood, a trunk flap etc. The same manipulator, if so desired, shall be able first to open one door, e.g. the front seat door and thereupon, after a displacement either of the car body or of the manipulator, to open the other, rear seat door. The manipulator shall require only little space and it shall be possible to locate it e.g. completely or partly below the car body, if this is transported on a conveyor system. Rather big tolerances shall be allowable at the positioning of the car body relative to the manipulator. These objects have according to a first embodiment been solved by arranging said magnet(-s) on an arm pivoted for rotation about an axle located in substantially the same plane as the hinge axle of said member, pivoting said arm, so as to move the magnet(-s) in a path substantially parallel to said path of said member and spaced a small distance outside an area over which said member is pivotable, to exert via an air gap a magnetic force upon at least one of the limiting sides of said structural member, thereby effecting pivoting of said structural member about the hinge upon swinging said arm about its pivot axle.

According to another embodiment the magnet are arranged along said path outside an area over which said member is pivotable, to exert via an air gap a magnetic force upon at least one of the limiting sides of said member, and said magnet(-s) being arranged in a fixed pattern so as to exert on said member a force effecting pivoting of said member upon movement of said object along a further path past said magnet(-s)

Description of the drawings

The invention will hereinafter be further described with reference to the drawings, which show some embodiments.

Figure 1 shows in perspective a portion of a passenger car body and a manipulator to the invention during the very opening or closing motion.

Figure 2 shows a section through the lower portion of a car door with the magnet arm of the manipulator in position for opening the door.

Figure 3 shows a first embodiment of a manipulator according to the invention in a side view.

Figure 4 shows a second embodiment of a manipulator according to the invention in a side view.

Figures 5 and 6 show a third embodiment of the device according to the invention in a side view and a view from above.

Figure 7 shows in perspective a simplified embodiment, developed particularly for closing car doors.

Figures 8 and 9 show schematically the closing process with the device according to figure 7 in a view from above.

Figure 10 shows in a view from above a manipulator according to the invention with stationary magnets arranged for opening as well as closing a structure member.

## DESCRIPTION OF THE EMBODIMENTS

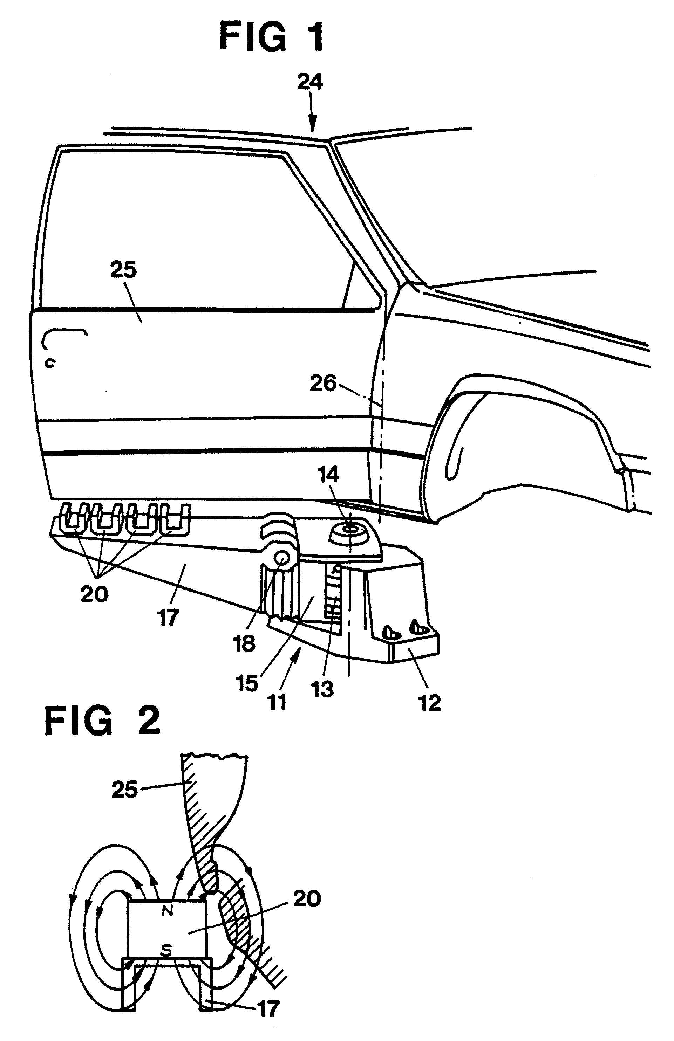

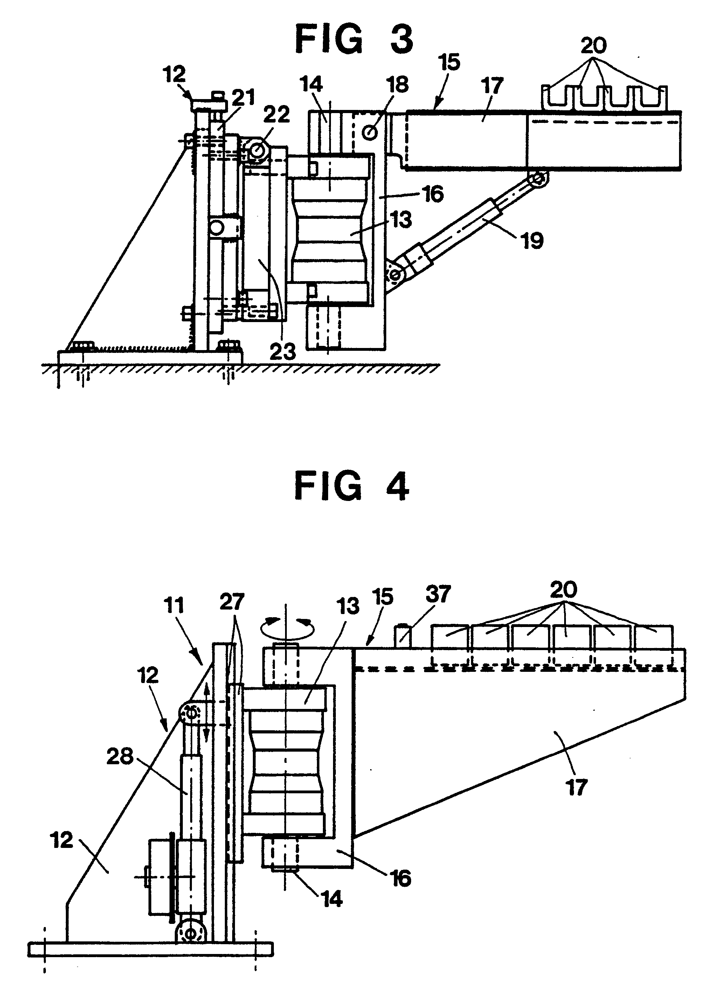

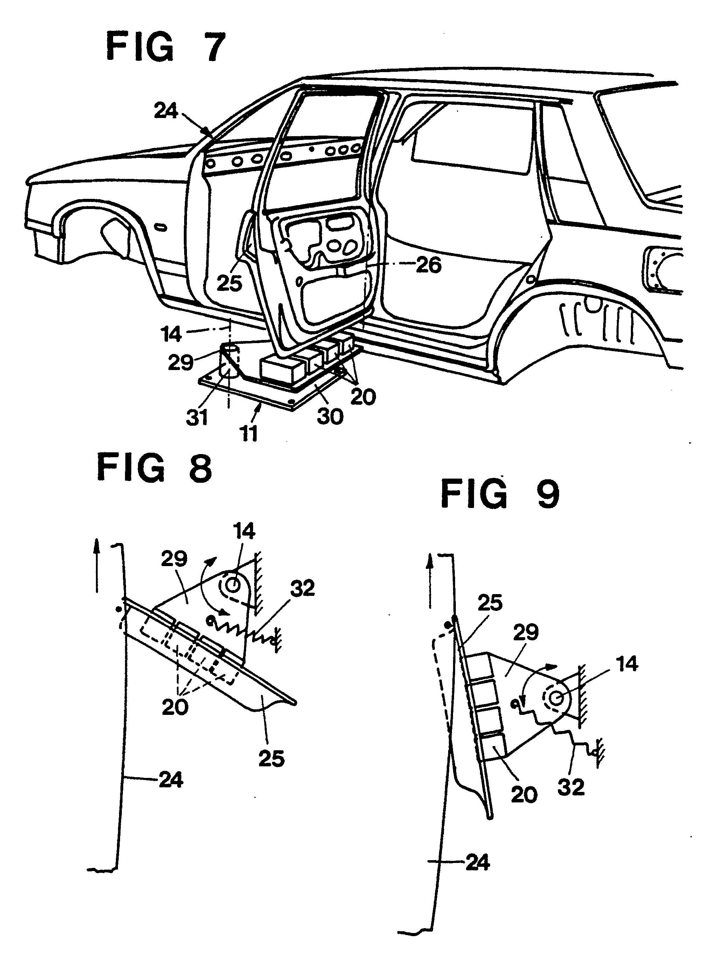

The manipulator 11 according to the invention consists of a frame 12, which supports an actuator 13, e.g. designed as a pivoting hydraulic jack (shown in fig. 1,3 and 4) or designed as a reciprocating piston-cylinder device (fig. 8 and 9) and which is arranged to pivot a bracket 15, which is articulated to the frame, around a pivot axle 14. At the embodiment shown in figures 1 and 3 the bracket 15 consists of a carrier 16 and an arm 17 pivotably supported about a horizontal axle 18 and the horizontal or inclination angle of which arm is adjustable by means of a servo mechanism 19. This is articulatedly connected to the carrier 16 and also to the arm 17. On the upper side of the arm 17 there is fitted a number of magnets 20 in such a manner that their poles are facing upwards towards a structure member 25 situated at some distance therefrom and which e.g. can be a door (fig. 1), a flap, a hood or the like. The manipulator is arranged outside the pivot area of the structure member 25, thus that only a small air gap separates the structure member from the manipulator, when activated.

In cases where the manipulator has to be adaptable to occuring height variations at the object to be acted upon, the frame 12 of the manipulator is provided with a vertically and laterally adjustable plate 21, which in turn via a horizontal hinge 22 supports a carrier 23, to which the actuator 13 is affixed. The actuator thus can be adjusted vertically, laterally and as to its inclination against the horizontal plane.

The manipulator is developed particularly for contact-free opening and closing of doors 25 of a passenger car body 24, which is transported upon a conveyor (not shown) and which forms an important part e.g. of an automatized surface treatment system, where the painting is carried out by robots. The manipulator of course can also be adapted to other working functions. Depending upon how the working process shall be accomplished there may be a manipulator on each side of the car body. The manipulators can be programmed in such a manner that they first open and then close one front seat door each and repeat the same procedure on the rear seat door after a displacement of the car body. It is however also possible to arrange a manipulator for each door, and if the painting is made according to the line production principle it is possible to designed the manipulators thus that they will perform a travelling motion synchronized with the motion of the car body. Another alternative is that a manipulator is intended only for opening the doors and another has been given the closing function.

The manipulator 11 is designed with such a low height, that it can be accomodated mainly below the car body 10 transported on the conveyor track. The position of the manipulator relative to the car body is therefore chosen so that the manipulator arm 17 will be situated just in front of and below the door 25 to be opened. It is thereby not absolutely necessary that the hinge axle 26 of the door 25 is aligned with the vertical pivot axle 14 of the manipulator, but certain differences can be accepted. Due to the demand for contact-freeness and a reliable function it is however essential that these two axles are mainly parallel.

In the manufacturing phase in which the car body is when it shall be painted, the locking means of the car is not yet installed and the door is held in closed position by means of springs in the door or by a temporary magnetic fixture. When opening the door it is therefore necessary to overcome this spring or magnet force, and as the door in a previous operation has obtained an external layer of paint, is it imperative that the surface is not touched. For these reasons the manipulator arm 17 with the magnets 20 is located at such a short distance below the lower edge of the door as possible. A free air gap of e.g. 5 - 20 mm at a certain given magnetic force has proven itself to be appropriate, also in view of occuring height variations of the car bodies. The magnets 20 are thus located upon the arm 17, so that a concentration of the field lines is achieved above them. If horseshoe-shaped permanent magnets are chosen the poles shall be facing the lower edge of the door 25. A pivoting of the arm 17 by means of the actuator 13 results in the magnetic force opening the door and pivots it to open position, which has been pre-programmed in the control equipment for the manipulator (not shown). The door can either be closed by the same manipulator or the car body can otherwise be moved to the consequtive working area, e.g. in order to paint its rear doors, whereby the closing is made of a manipulator particularly intended for this function. Independent of the working task given to the manipulator, the arm after terminated opening or closing movement, can be pivoted about the hinge axle 18 in a direction away from the door, whereby the air gap will be so big that the magnetic force is interrupted. The arm can return to its initial position after the car body has been moved.

Instead of tilting the arm 17, such as shown in the embodiment according to figure 3, the arm 17 together with actuator 13 can also be vertically displaceable along guides 27 provided on the frame 12. The displacement motion is then effected with an actuator 28, in accordance with what is shown in figure 4.

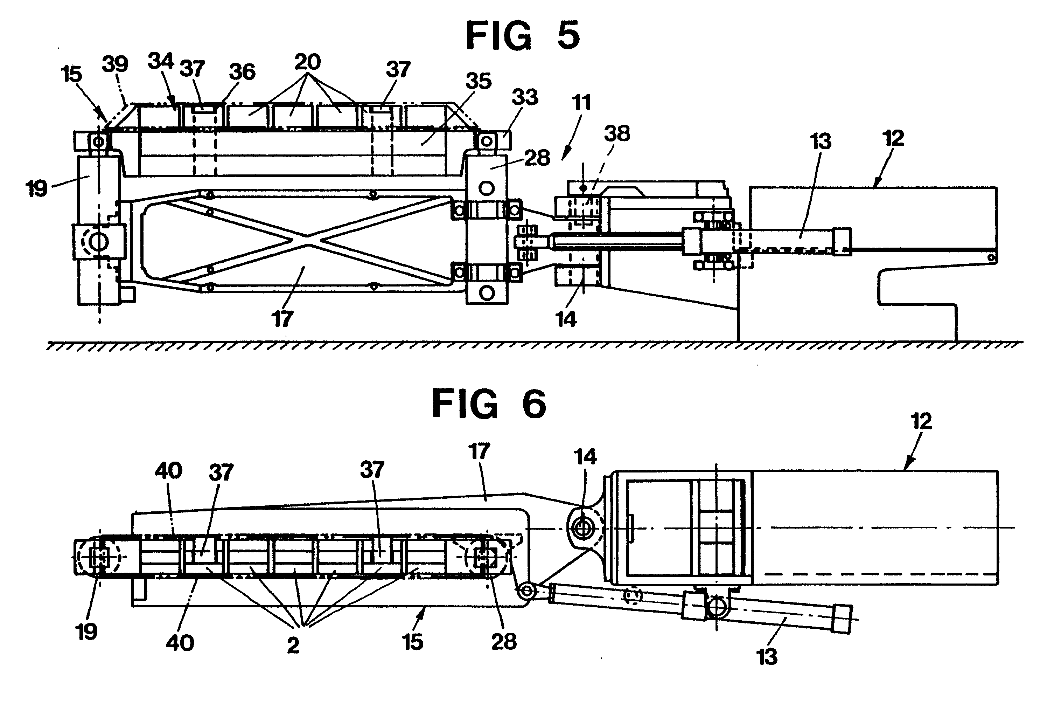

The embodiment according to figures 5 and 6 differs from the variations shown in figures 3 and 4, in that the arm 17 carries an actuator 19 and 28 at each of its front and rear ends, e.g. hydraulic piston cylinder devices, the piston rods of which carry a magnet carrier 33, preferably of soft iron and a pack of magnets 34 consisting of a ceramic magnet block 35 upon which is rigidly fixed magnet bodies 20, preferably from a metallic compound of cobalt and rare earth types in order to obtain the highest possible magnetic effect. In two of the magnet bodies 20 there are arranged one depression 36 each for a transmitter 37, which contactless can sense the position of the magnets in relation to the lower edge of door 25.

As the hinges of the doors 25 can not be supposed to be completely free from play and the car body can have an instable position upon the conveyor, it can occur that the lower edge of the door is situated below the highest permissible height level. In order to reduce the effects of a collision between the lower edge of the door and the manipulator as far as possible. there is arranged over the magnets 20 a protective casing 39 made of a nonmagnetic material e.g. aluminum, the lower edge of said casing being resting against one or more pressure pulse transmittors 40, which effect an immediate lowering of the manipulator arm 15 if the casing should be subjected to a pressure, i.e. if e.g. a collision with a door should occur. As pressure transmitter it is e.g. possible to use a liquid-filled hose upon which said protective casing 39 and which hose at a pressure increase provides a signal which by the computer is converted into an order for lowering the arm.

As doors of different car body types have varying opening angles, and also the opening angle can vary between a front seat door and a rear seat door it is essential that the angle of the arm 15 relative to the frame 12 can be positioned. This is preferably achieved by means of an angle transmitter 38, which can be arranged in a bore in the interior of the shaft journal 14.

The distance from the car body to the floor and thereby also to the upper edge of the magnets 20 can vary within certain limits, and it is therefore necessary that the air gap between the lower edge of the door 25 and the upper edge of the magnets can be adjusted. This is preferably accomplished by means of said transmitters 37 arranged on the arm 17 or in depressions in the magnets, and which contact-free, optically or electronically senses the space between the door and the magnets and via a comparator emits a signal to the actuator 19 or 28 resp. for a position adjustment of the arm 17. Instead of measuring the space it is also possible, by means of a Hall generator, to measure the instant magnetic field strength, which is proportional to the size of the air gap.

Certain movements, e.g. closing of a door or the like, can be achieved with a smaller power requirement, and the embodiment shown in figures 7 to 9 has been developed for this purpose. At this embodiment the manipulator 11 consists of a plate 29, to which is affixed a plurality of magnets 20. The plate 29 is pivotable about a vertical axle 14 relative to a base plate 30, and it is vertically adjustable by means of a spacing member 31. The manipulator 11, in the same manner as in the embodiments described hereabove, is located somewhat below the door 25 of the car body 24 and outside its pivoting area, thus that a door which is open, at the transfer of the car body along the conveyor track, at a certain position will be situated just above the pack of magnets 20. This will then exert a magnetic attraction force upon the lower edge of the door, which force is so big that the door, at a continued transfer of the car body, will be pivoted concurrently with the transfer motion of the car body, at the same time as the plate 29 with the magnets 20 rotate about the axle 14, thus that a gradual closing of the door is effected. When the attraction force terminates, due to the fact that the door has passed the magnets, the plate 29 is pivoted back to its initial position by means of a tension spring 32 or the like.

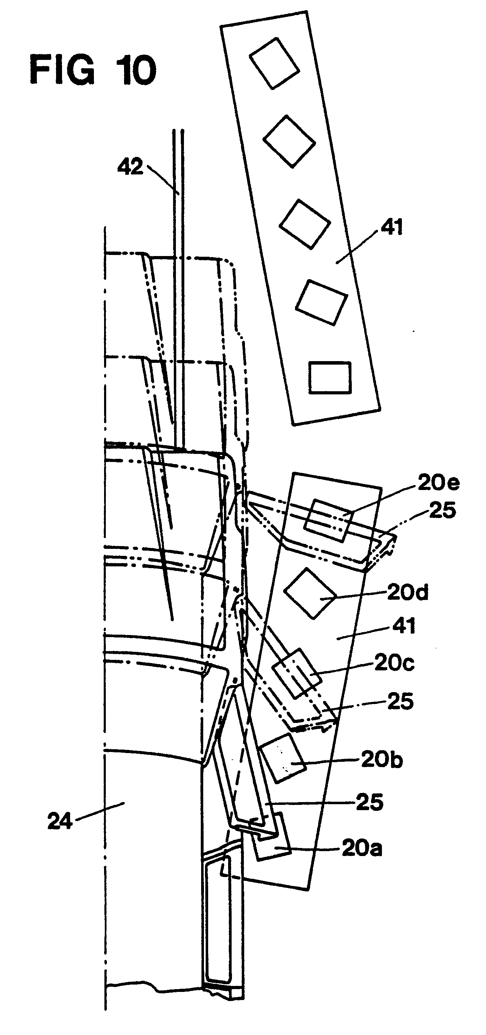

It is also possible to arrange the magnets 20 stationary, on one or more, preferably vertically adjustable plates 41, such as shown in figure 10. The magnets are arranged in a pattern, which corresponds to the movement path the door shall perform, when the car body 24 and its door is moved along a conveyor track 42 past the magnets. The door will be subjected to a lateral magnetic force which provides a pivoting of the door from or towards the car body as the distance to the nearest magnet 20a, 20b, 20c etcetera increases or decreases.

The invention is not limited to the embodiments shown but a plurality of variations are possible within the scope of the claims. The magnets thus can be electro magnets, if an electric interruption of the magnet power is desired.

## Claims

1. A method for contact-free pivoting of a magnetic metallic structural member (25), e.g. a door, a flap or the like, of an object (24), e.g. a car body, about a hinge (26) fitted to the structural member (25) and to the object (24) so as to permit pivoting of said member along a path relative to the object, pivoting of said member (25) about the hinge (26) being effected by magnetically coupling said member (25) with at least one magnet (20), **characterizid in,** arranging said magnet(-s) on an arm (17) pivoted for rotation about an axle (14) located in substantially the same plane as the hinge axle (26) of said member (25), pivoting said arm (17), so as to move the magnet(-s) in a path substantially parallel to said path of said member (25) and spaced a small distance outside an area over which said member (25) is pivotable, to exert via an air gap a magnetic force upon at least one of the limiting sides of said structural member (25), thereby effecting pivoting of said structural member (25) about the hinge (26) upon swinging said arm (17) about its pivot axle (14).

2. A method as claimed in claim 1,
   **characterized in,**
   pivoting the arm (17) about said pivot axle (14) either by means of an actuator (13) or by the motion of the passing structural member (25) under influence of the magnetic force.

3. A method as claimed in claim 2,
   **characterized in,**
   moving the arm (17) and/or the magnet/magnets (20) in the vertical direction and adjusting them in different angular positions relative to the structural member (25) in order to maintain a constant air gap between the magnet and the structural member and furthermore for pivoting away the arm when the magnetic force acting upon the structural member shall be interrupted.

4. A method as claimed in claim 1 or 2,
   **characterized in,**
   adjusting the angular position of the magnet/magnets (20) relative to the structure member (25) to a limited extent under influence of the magnetic forces.

5. A method as claimed in one or more of the preceeding claims,
   **characterized in,**
   moving the arm (17) preferably along a trackbound path mainly parallel with the direction of movement of the object.

6. A method as claimed in one or more of the preceeding claims,
   **characterized in,**
   choosing as magnets block shaped permanent magnets arranged on a ceramic magnetic block, which is supported by the arm (17), which consists of soft iron.

7. A method as claimed in claim 3,
   **characterized in,**
   measuring the distance between the magnets (20) and the structural member (25) by means of transmitters (16) arranged on the arm (17) and/or the magnet(-s) using said measurement signal as a control signal for the adjustment of the height and inclination position of the arm.

8. A method as claimed in one or more of the preceeding claims,
   **characterized in,**
   arranging an angle transmitter (38), preferably in the hinge (14) between the frame (12) and the arm (15) for positioning the angle of the arm relative to the frame by means of an actuator (13).

9. A method as claimed in one or more of the preceeding claims,
   **characterized in,**
   enclosing the magnet(-s) (20) in a nonmagnetic protective casing (39) arranged to rest upon pressure sensitive transmitters (40), which are designed to emit a control signal, for bringing about a lowering of the arm (15) at a collision between the upper side of the protective cover and an object.

10. A method for contact-free pivoting of a magnetic metallic structural member (25), e.g. a door, a flap or the like, of an object (24), e.g. a car body, about a hinge (26) fitted to the structural member (25) and to the object (24) so as to permit pivoting of said member along a path relative to the object, pivoting of said member (25) about the hinge (26) being effected by magnetically coupling said member (25) with at least one magnet (20),
    **characterizid in,**
    arranging said magnet(-s) along said path outside an area over which said member is pivotable, to exert via an air gap a magnetic force upon at least one of the limiting sides of said member, and said magnet(-s) being arranged in a fixed pattern so as to exert on said member a force effecting pivoting of said member upon movement of said object along a further path past said magnet(-s)

**Revendications**

1. Procédé pour faire pivoter sans contact un élément de structure métallique magnétique (25), par exemple, une porte, un volet ou similaires, d'un objet (24), par exemple une carrosserie d'automobile, autour d'une charnière (26) fixée à l'élément de structure (25) et à l'objet (24), de façon à permettre le pivotement dudit élément le long d'une trajectoire par rapport à l'objet, le pivotement dudit élément (25) autour de la charnière (26) étant effectué par couplage magnétique dudit élément (25) avec au moins un aimant (20),
caractérisé par le fait
qu'on dispose ledit (ou lesdits) aimant(s) sur un bras (17) monté pivotant pour tourner autour d'un axe (14) disposé sensiblement dans le même plan que l'axe de charnière (26) dudit élément (25), qu'on fait pivoter ledit bras (17) de façon à déplacer le (ou les) aimant(s) dans une trajectoire sensiblement parallèle à ladite trajectoire dudit élément (25) et espacée d'une petite distance à l'extérieur d'une zone sur laquelle ledit élément (25) est monté pivotable, pour exercer, par l'intermédiaire d'un intervalle d'air, une force magnétique sur au moins l'un des côtés limites dudit élément de structure (25), effectuant ainsi le pivotement dudit élément de structure (25) autour de l'articulation (26) lors du basculement dudit bras (17) autour de son axe de pivotement (14).

2. Procédé selon la revendication 1,
caractérisé par le fait
qu'on fait pivoter le bras (17) autour dudit axe de pivotement (14), soit au moyen d'un organe de manoeuvre (13), soit par le mouvement de l'élément de structure (25) passant, sous l'influence de la force magnétique.

3. Procédé selon la revendication 2,
caractérisé par le fait
qu'on déplace le bras (17) et/ou l'aimant/les aimants (20) dans la direction verticale et qu'on les ajuste dans différentes positions angulaires par rapport à l'élément de structure (25), de façon à maintenir un intervalle d'air constant entre l'aimant et l'élément de structure, et, de plus, pour éloigner le bras par pivotement lorsque la force magnétique agissant sur l'élément de structure sera interrompue.

4. Procédé selon la revendication 1 ou 2,
caractérisé par le fait
qu'on ajuste la position angulaire de l'aimant/des aimants (20) par rapport à l'élément de structure (25) dans une mesure limitée sous l'influence des forces magnétiques.

5. Procédé selon l'une ou plusieurs des revendications précédentes,
caractérisé par le fait
qu'on déplace le bras (17) de préférence le long d'une trajectoire sur rails sensiblement parallèle à la direction de mouvement de l'objet.

6. Procédé selon l'une ou plusieurs des revendications précédentes,
caractérisé par le fait
qu'on choisit, comme aimants, des aimants permanents en forme de blocs, disposés sur un bloc magnétique céramique, qui est supporté par le bras (17) qui se compose de fer doux.

7. Procédé selon la revendication 3,
caractérisé par le fait
qu'on mesure la distance entre les aimants (20) et l'élément de structure (25) au moyen de transmetteurs (16) disposés sur le bras (17) et/ou le (ou les) aimant(s), à l'aide dudit signal de mesure en tant que signal de commande pour l'ajustement de la position en hauteur et d'inclinaison du bras.

8. Procédé selon l'une ou plusieurs des revendications précédentes,
caractérisé par le fait
qu'on dispose un capteur angulaire (38), de préférence dans la charnière (14) entre le châssis (12) et le bras (15) pour positionner l'angle du bras par rapport au châssis au moyen d'un organe de manoeuvre (13).

9. Procédé selon l'une ou plusieurs des revendications précédentes,
caractérisé par le fait
qu'on enferme le (ou les) aimant(s) (20) dans un boîtier protecteur non-magnétique (39), disposé de façon à venir en appui sur des transmetteurs (40) sensibles à la pression, qui sont destinés à émettre un signal de commande, pour provoquer un abaissement du bras (15) lors d'une collision entre le côté supérieur du couvercle protecteur et un objet.

10. Procédé pour faire pivoter sans contact un élément de structure métallique magnétique (25), par exemple, une porte, un volet ou similaires, d'un objet (24), par exemple, d'une carrosserie d'automobile, autour d'une charnière (26) fixée à l'élément de structure (25) et à l'objet (24), de façon à permettre le pivotement dudit élément le long d'une trajectoire par rapport à l'objet, le pivotement dudit élément (25) autour de la charnière (26) étant effectué par couplage magnétique dudit élément (25) avec au moins un aimant (20),
caractérisé par le fait
qu'on dispose ledit (ou lesdits) aimant(s) le long de ladite trajectoire à l'extérieur d'une zone sur laquelle ledit élément est monté pivotable, pour exercer, par l'intermédiaire d'un intervalle d'air, une force magnétique sur au moins l'un des côtés limites dudit élément, et ledit (ou lesdits) aimant(s) étant disposé(s) suivant un motif fixé, de façon à exercer, sur ledit élément, une force effectuant le pivotement dudit élément lors du mouvement dudit objet le long d'une autre trajectoire devant ledit (ou lesdits) aimant(s).

**Patentansprüche**

1. Verfahren zum berührungsfreien Drehen eines magnetischen, metallischen Bauteils (25), z.B. einer Tür, einer Klappe o. dgl., eines Gegenstandes (24), z.B. eines Wagenkörpers, um ein Scharnier (26), das an dem Bauteil (25) und dem Gegenstand (24) so befestigt ist, daß das Bauteil auf einer Bahn relativ zu dem Gegenstand gedreht werden kann, wobei die Drehung des Bauteils (25) um das Scharnier (26) durch die magnetische Koppelung des Bauteils (25) mit wenigstens einem Magneten (20) durchgeführt wird, dadurch gekennzeichnet, daß der Magnet bzw. die Magnete auf einem Arm (17) angeordnet sind, der um eine Achse (14) gedreht wird, welche im wesentlichen in derselben Ebene wie die Achse des Scharniers (26) des Bauteils (25) liegt, daß der Arm (17) so geschwenkt wird, daß der Magnet bzw. die Magnete sich auf einer Bahn bewegen, die im wesentlichen parallel zu der Bahn des Bauteils (25) verläuft und mit einem kleinen Abstand außerhalb einer Zone liegt, über welche das Bauteil (25) schwenkbar ist, so daß über einen Luftspalt eine Magnetkraft auf wenigstens eine Begrenzungswand des Bauteils (25) ausgeübt wird, wodurch das Bauteil (25) um das Scharnier (26) geschwenkt wird, wenn der Arm (17) um seine Achse (14) gedreht wird.

2. Verfahren nach Anspruch 1, dadurch gekennzeichnet, daß der Arm (17) um seine Achse (14) entweder durch einen Kraftantrieb (13) oder durch die Bewegung des durchlaufenden Bauteils (25) unter Einfluß der Magnetkraft geschwenkt wird.

3. Verfahren nach Anspruch 2, dadurch gekennzeichnet, daß der Arm (17) und/oder der Magnet bzw. die Magnete (20) in vertikaler Richtung bewegt und in unterschiedlichen Winkelstellungen relativ zu dem Bauteil (25) eingestellt werden, um einen konstanten Luftspalt zwischen dem Magneten und dem Bauteil einzuhalten und um den Arm wegzuschwenken, wenn die auf das Bauteil wirkende Magnetkraft unterbrochen werden soll.

4. Verfahren nach Anspruch 1 oder 2, dadurch gekennzeichnet, daß die Winkelstellung des Magneten (20) bzw. der Magnete relativ zu dem Bauteil (25) bis zu einem begrenzten Ausmaß unter Einfluß der Magnetkräfte eingestellt wird.

5. Verfahren nach einem der vorhergehenden Ansprüche, dadurch gekennzeichnet, daß der Arm (17) entlang einer schienengebundenen Bahn bewegt wird, die im wesentlichen parallel zur Bewegungsrichtung des Gegenstandes ist.

6. Verfahren nach einem der vorhergehenden Ansprüche, dadurch gekennzeichnet, daß als Magnete blockförmige Permanentmagnete verwendet werden, die auf einem keramischen Magnetblock angeordnet sind, der auf dem Arm (17) gelagert ist, welcher aus Weicheisen besteht.

7. Verfahren nach Anspruch 3, dadurch gekennzeichnet, daß der Abstand zwischen den Magneten (20) und dem Bauteil (25) durch Sender (16) gemessen wird, welche auf dem Arm (17) und/oder den Magneten angeordnet sind, wobei die Meßsignale als Steuersignale für die Einstellung der Höhe und Neigung der Armstellung verwendet werden.

8. Verfahren nach einem der vorhergehenden Ansprüche, dadurch gekennzeichnet, daß ein Winkelmeßwertgeber (28) vorzugsweise im Scharnier (14) zwischen dem Rahmen (12) und dem Arm (15) angeordnet ist, um den Winkel des Armes relativ zu dem Rahmen mittels eines Kraftantriebes (13) einzustellen.

9. Verfahren nach einem der vorhergehenden Ansprüche, dadurch gekennzeichnet, daß der Magnet bzw. die Magnete (20) in einem nicht magnetischen Schutzgehäuse (29) eingeschlossen sind, das auf druckempfindlichen Meßwertgebern (40) abgestützt ist, die so ausgebildet sind, daß sie ein Steuersignal aussenden, um den Arm (15) abzusenken, wenn die Oberseite des Schutzgehäuses mit dem Gegenstand zusammenstößt.

10. Verfahren zum berührungsfreien Drehen eines magnetischen, metallischen Bauteils (25), z.B. einer Tür, einer Klappe o. dgl., eines Gegenstandes (24), z.B. eines Wagenkörpers, um ein Scharnier (26), das an dem Bauteil (25) und dem Gegenstand (24) so befestigt ist, daß das Bauteil auf einer Bahn relativ zu dem Gegenstand gedreht werden kann, wobei die Drehung des Bauteils (25) um das Scharnier (26) durch die magnetische Koppelung des Bauteils (25) mit wenigstens einem Magneten (20) durchgeführt wird, dadurch gekennzeichnet, daß der Magnet bzw. die Magnete auf der Bahn außerhalb einer Zone angeordnet sind, über welche das Bauteil schwenkbar ist, um über einen Luftspalt eine Magnetkraft auf wenigstens eine der Begrenzungsseiten des Bauteils auszuüben, und daß der Magnet bzw. die Magnete in einem festen Muster angeordnet sind, um auf das Bautei eine Kraft auszuüben, durch welche das Bauteil bei Bewegung des Gegenstandes entlang einer weiteren Bahn an den Magneten vorbei geschwenkt wird.

# FIG 1

**24**

**25**

**26**

**14**

**20**

**17**

**18**

**15**

**11**

**13**

**12**

# FIG 2

**25**

**20**

**17**

N

S

# FIG 3

# FIG 4

FIG 5

FIG 6

# FIG 7

# FIG 8

# FIG 9

# FIG 10